Europäisches Patentamt

European Patent Office

Office européen des brevets

(11) Veröffentlichungsnummer: **0 532 972 A1**

## (12) EUROPÄISCHE PATENTANMELDUNG

(21) Anmeldenummer: **92114930.8**

(22) Anmeldetag: **01.09.92**

(51) Int. Cl.⁵: **H04Q 11/04**, H04M 11/06, H04M 1/00

(30) Priorität: **18.09.91 DE 4131062**

(43) Veröffentlichungstag der Anmeldung:
**24.03.93 Patentblatt 93/12**

(84) Benannte Vertragsstaaten:
**AT BE CH DK ES FR GB GR IT LI NL SE**

(71) Anmelder: **SIEMENS AKTIENGESELLSCHAFT**
**Wittelsbacherplatz 2**
**W-8000 München 2(DE)**

(72) Erfinder: **Kaufmann, Peter**
**Ständlweg 1 d**
**W-8031 Gilching(DE)**

(54) **Verfahren und Fernmeldeendgerät zur Herstellung von Fernmeldeverbindungen in einem ISDN-Kommunikationssystem.**

(57) Ein ISDN-Fernmeldeendgerät ist über zwei X.21- oder V35-Schnittstellen sowie eine Akustikschnittstelle mit einem Videotelefon VT verbunden. Zur Herstellung einer Videoverbindung baut das Endgerät T eine Sprachverbindung zu einem B-Endgerät auf. Soweit dieses ein Videoverbindung herstellen kann, baut das Endgerät T eine zweite Verbindung zu dem B-Endgerät auf.

Ist das Endgerät T einer entsprechend ausgestaltete Nebenstellenanlage zugeordnet, werden deren Fernsprechleistungsmerkmale wie beispielsweise "Rückruf im Besetztfall", "Wahlwiederholung" mitbenutzt.

FIG 1

Die Erfindung betrifft ein Verfahren nach dem Oberbegriff des Patentanspruchs 1 sowie ein Fernmeldeendgerät nach dem Oberbegriff des Patentanspruchs 2.

Es ist bereits eine Videokonferenzanlage der amerikanischen Firma Picture-Tel Corporation bekannt, welche in ISDN-Kommunikationssystemen integrierbar sind (Funkschau 18/1991, Seite 12). Zum Betrieb der bekannten Videokonferenzanlagen werden zwei Verbindungen mit assoziierter Wahl als 64 kBit/sec - oder 56 kBit/sec - Datenverbindungen manuell aufgebaut. Verbindungen sind nur zwischen gleichstruktuierten Videokonferenzanlagen möglich. Zu herkömmlichen ISDN-Fernmeldeendgeräten sind dagegen keine Verbindungen herstellbar.

Der Erfindung liegt daher die Aufgabe zugrunde, ein Verfahren der eingangs genannten Art anzugeben, daß unter Einbeziehung eines herkömmlichen ISDN-Fernmeldeendgeräts durchführbar ist.

Die Lösung dieser Aufgabe erfolgt erfindungsgemäß mit dem kennzeichnenden Merkmalen des Anspruchs 1.

Als wesentlich für die Erfindung ist anzusehen, daß herkömmliche ISDN-Fernmeldeendgeräte einer erweiterten Nutzungsmöglichkeit zugeführt werden. ISDN-Fernmeldeendgeräte gemäß der Erfindung eignen sich sowohl für die Durchführung der herkömmlichen Aufgaben im Zusammenhang mit der Abwicklung von Fernsprechverbindungen als auch der Durchführung von Verbindungen zu bzw. von Videokonferenzanlagen. Dabei erweist es sich als besonders vorteilhaft, daß die Verbindung von einem Videotelefon über das erfindungsgemäße Endgerät zu einem Sprachendgerät als normale Sprachverbindung aufgebaut wird, denn damit werden, wenn das erfindungsgemäße Endgerät einer entsprechend ausgestalteten Nebenstellenanlage zugeordnet ist, deren Leistungsmerkmale wie beispielsweise "Rückruf im Besetztfall", "Wahlwiederholung" usw. mitbenutzt.

Eine vorteilhafte Ausführungsform des erfindungsgemäßen Fernmeldeendgeräts ist dadurch gekennzeichnet, daß das Fernmeldeendgerät einen ersten und zweiten Prozessor aufweist, daß dem ersten und zweiten Prozessor ein erstes und ein zweites Programm zugeordnet ist, daß das erste und zweite Programm in der Weise ausgestaltet ist, daß der erste Prozessor die erste Verbindung zum zweiten Endgerät aufbaut und ausgelöst durch die zweite Information den zweiten Prozessor veranlaßt, die zweite Verbindung aufzubauen. Damit ist das Programm des ersten Prozessors gegenüber einem herkömmlichen Fernmeldeendgerät nur in geringem Umfang zu ändern; ein herkömmliches Fernmeldeendgerät läßt sich in relativ einfacher Weise um einen zweiten Prozessor ergänzen und damit zu einem erfindungsgemäßen Fernmeldeendgerät ausgestalten. Dies gilt insbesondere dann, wenn ein herkömmliches Fernmeldeendgerät eine entsprechende Schnittstelle aufweist und der zweite Prozessor auf einem mit dem Fernmeldeendgerät verbindbaren Schaltungsmodul implementiert ist.

Die Erfindung wird nun anhand der Figuren näher dargestellt.

Es zeigen:

Fig. 1    ein ISDN-Kommunikationssystem mit einem erfindungsgemäßen Fernmeldeendgerät und einem Videotelefon;

Fig. 2    die schaltungstechnische Ausgestaltung des erfindungsgemäßen Fernmeldeendgeräts; und

Fig. 3    die schaltungstechnische Ausgestaltung eines an das erfindungsgemäße Fernmeldeendgerät nach Fig. 1 anschließbaren Adapters.

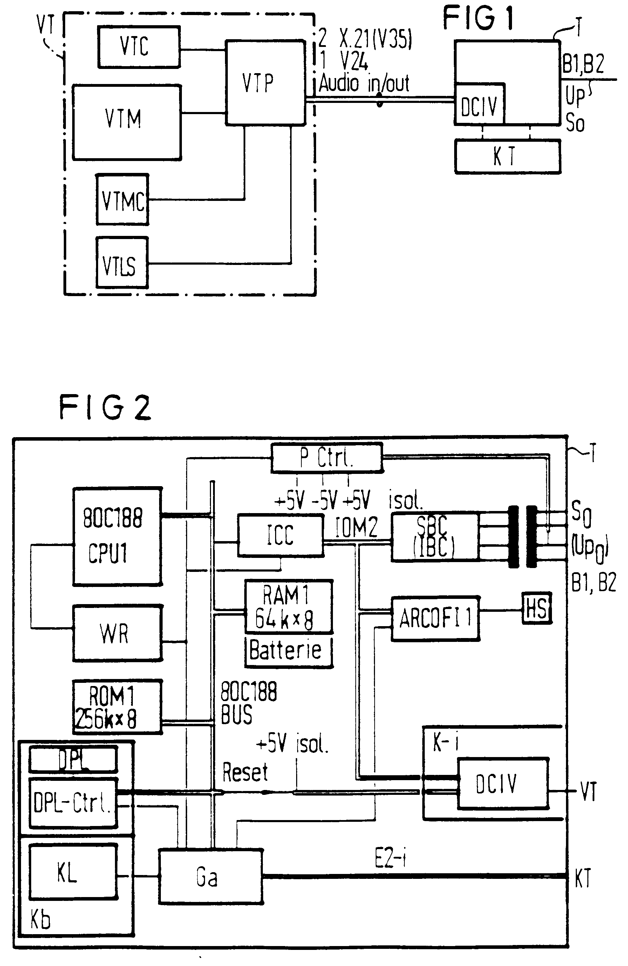

Das erfindungsgemäße FernmeldeendgerätT, das insbesondere als ISDN-Endgerät ausgebildet ist, ist über eine $U_{Po}$ oder eine S-Schnittstelle mit einer Vermittlungseinrichtung verbunden. Es ist weiterhin, beispielsweise über einen Adapter DCI V (Data Communication Interface Video) mit einem herkömmlichen Videotelefon, beispielsweise dem System 4000 der amerikanischen Firma Picture-Tel Corporation verbunden. Das Videotelefon VT das in Fig. 1 lediglich schematisch dargestellt ist, umfaßt eine Steuerung VTP die mit einer elektronischen Kamera VTC, einem Monitor VTM, einem externen Mikrofon VTMC und einem externen Lautsprecher VTLS verbunden ist. Die Steuerung VTP dient dazu, die Bildsignale der Kamera VTC zusammen mit den Sprachsignalen des Mikrofons VTMC oder des Handapparats des Endgeräts T auf zwei 64 kBits/Sec Schnittstellen zu komprimieren und umgekehrt zwei 64 kBits/Sec-Empfangssignale zu dekomrimieren und das Bildsignal auf den Monitor VTM bzw. das Sprachsignal auf den Lautsprecher VTLS oder den Handapparat den Endgeräts T zu übertragen. Das herkömmliche, direkt mit dem Vermittlungssystem verbundene Videotelefon VT stellt zwei Datenverbindungen zu einem Partner-Videotelefon her. Dagegen sind Verbindungen zwischen dem herkömmlichen Videotelefon und einem herkömmlichen ISDN-Fernmeldeendgerät ausgeschlossen.

Eine Kontrolltastatur KT, die noch beschrieben wird, kann mit dem Adapter DCI V oder mit einem Prozessor CPU1 (Fig. 2) des Endgeräts T verbunden sein.

Das in Fig. 2 dargestellte Fernmeldeendgerät gemäß der Erfindung ist vorzugsweise unter Verwendung von Standardchips aufgebaut.

Derartige Standardchips sind beispielsweise in der Zeitschrift Electronic 13/22.6.1990, Seiten 52 bis 56 (Lemme: "ISDN-Endgeräte mit Minimum an Chips") sowie in der Zeitschrift "Siemens Components 28" (1990), Heft 4, Seiten 123 bis 126
(Kuhn/Bry: "IC- Familie für optimierte ISDN-Endgeräte") beschrieben.

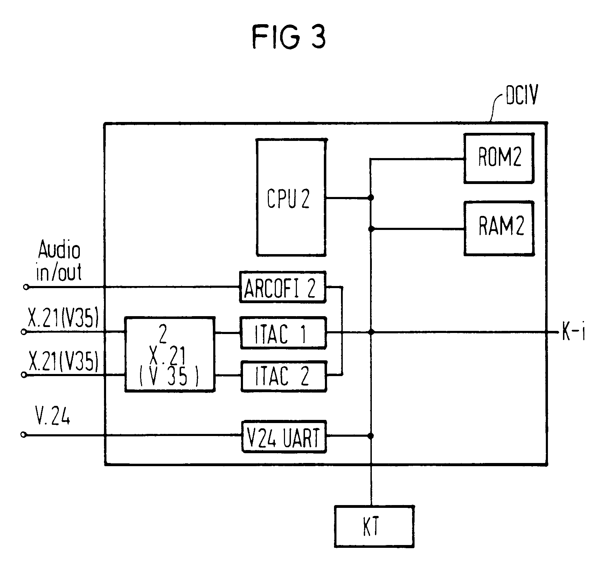

Das erfindungsgemäße Fernmeldeendgerät,
das insbesondere als ISDN-Endgerät ausgebildet
ist, weist eingangsseitig (in Fig. 2 rechts oben) eine
So-Schnittstelle auf, die mit einem Trennübertrager
zur galvanischen Trennung von der Leitung verbunden ist. Das Endgerät T wird vom Netzabschluß
her mit der erforderlichen Speisespannung von beispielsweise 40 V versorgt. Ein Wandler P Ctrl. setzt
die Gleichspannung ebenfalls mit einem Trennübertrager auf +5 V (isoliert) herab. Die genannten
Spannungen werden auch -wie in Figur 3 dargestellt - den einzelnen Komponenten dem in Figur 3
dargestellten Schaltungsmodul DCI V zugeführt.

Die dem eingangsseitigen Trennübertrager
nachgeordnete Komponente SBC wird insbesondere durch einen Chip der Firma Siemens mit der
Produktbezeichnung PEB2080/81 gebildet. Bei dieser Komponente handelt es sich um einen CCITT-
kompatiblen Schicht-I-Baustein für die S/T-Schnittstelle. Mit diesem Baustein SBC sind die weiteren
Bausteine ICC, ARCOFI 1 und über eine Schnittstelle (K-Interface) ein Schaltungsmodul DCI V
(Data Communication Interface Video) verbunden.

Die Verbindung erfolgt durch die standardisierte IOM-2-Schnittstelle, die eine 4-Draht Schnittstelle ist und aus bis zu acht Kanälen besteht, die im
Zeitmultiplexbetrieb übertragen werden. Sie basiert
auf der ISDN-orientierten modularen IOM-Schnittstelle und besteht aus zwei Datenleitungen (DU =
Data Upstream, DD = Data Downstream) und zwei
Taktsignalen (DCL = Data Clock, FSC = Frame
Synchronisation). Im sogenannten Terminal-Mode
setzt sich das IOM-2-Interface aus drei Kanälen
zusammen. Jeder dieser Kanäle besteht aus vier
Oketten. Kanal "O" enthält die ISDN-Nutzdaten (B1
+ B2 + D-Kanal) sowie Überwachungs- und Steuerdaten (Monitor und C/I) für die Schicht-I-Bausteine. Im Kanal "I" befinden sich zwei Interkommunikationskanäle IC mit je 64 kBit/s sowie ein Monitor
und C/I-Kanal. Dieser kann zur Steuerung von bestimmten Modulen im Endgerät, z.B. dem Sprachteil ARCOFI 1, verwendet werden. Der dritte Kanal
kann für Buszugriffsprozeduren über den C/I-Kanal
verwendet werden, wobei restliche Kapazität für
weitere Applikationen reserviert ist.

Der mit dem Baustein SBC über die Schnittstelle IOM2 verbundene Baustein ICC ist ein sogenannter ISDN-Communication-Controller, der beispielsweise von der Firma Siemens mit der Produktbezeichnung PEB2070 geliefert wird. Es handelt sich dabei um einen I-Kanal-HDLC-Controller
mit zwei 64-byte-FIFO-Speichern.

Der Baustein SBC kann auch durch einen Baustein IBC, der beispielsweise mit der Produktbezeichnung PEB2095 von der Firma Siemens geliefert wird, ersetzt werden, womit dann eine
Zweidraht-UPO-Schnittstelle für das Fernmeldegerät gebildet wird. Die Verbindung mit den weiteren
Bausteinen ICC, ARCOFI 1 und dem Schaltungsmodul DCI V erfolgt in gleicher Weise wie beim
SBC. Der Baustein SBC kann auch mit dem Baustein ICC zu einem Baustein ISAC-S, wie er unter
der Produktbezeichnung PEB2085 von der Firma
Siemens geliefert wird, zusammengefaßt sein. Die
Schnittstelle zu den weiteren Bausteinen bleibt, wie
beschrieben, unverändert. Das gleiche gilt für den
Baustein IBC, der mit dem Baustein ICC zusammengefaßt den Baustein ISAC-P-bildet, wie er unter
der Produktbezeichnung PEB20950 von der Firma
Siemens angeboten wird.

Der Baustein ARCOFI 1 (Audio Ringing Codec
Filter) sendet und empfängt PCM-codierte Sprache
in einem der beiden B-Kanäle. In dem Baustein
ARCOFI sind die Funktionen "Tonruf-MFV-Generator" und "Verstärker" integriert. Gegebenfalls kann
dieser Baustein, der mit dem Handapparat HS verbunden ist, auch mit einer an sich bekannten Einrichtung (Hands Free Unit) für einen Freisprechbetrieb verbunden sein. Das Endgerät T weist ferner
ein übliches Prozessorsystem mit einem Bus
(80C188-Bus) auf, das gebildet ist aus

- einem Prozessor CPU1, der insbesondere ein
  Prozessor der Firma Siemens mit der Produktbezeichnung 80C188 sein kann,
- einem Programmspeicher mit 256 kB CMOS-
  Speicher ROM1,
- einem 64 kB statistischen CMOS-Speicher
  RAM1, der batteriegepuffert ist,
- einer an sich bekannten, sogenannten
  Watchdog- und Reset-Logik WR, die den Ablauf des Programms im Prozessor CPU 1
  überwacht und diesen bei Auftreten von Endlosschleifen zurücksetzt,
- einem Baustein "Gatearray" Ga, der die üblicherweise in einem derartigen Prozessorsystem notwendigen Puffer und Ein/Ausgabe
  (I/O)-Treiber zusammenfaßt.

Der Baustein "Gatearray" Ga enthält insbesondere auch einen Serien-/Parallel-Umsetzer, der eine
serielle Schnittstelle E2-i zu einer Kontrolltastatur
KT steuert, deren Funktion noch beschrieben wird
und die nach einer anderen Ausführungsform an
einen Prozessor CPU2 im Schaltungsmodul DCI V
angeschaltet ist. An die Puffer des Bausteins
"Gatearray" Ga ist auch eine Steuereinheit DPL-
Ctrl. (Figur 3) angeschlossen, die den Bildschirm
DPL des Endgeräts T steuert, sowie eine Einrichtung KL (Keyboard und LED), die eine Bedieneinheiteingabeeinrichtung Kb (Keyboard) und eine
Ausgabeeinrichtung (LED) mit Anzeige- elementen
in Form von lichtemittierenden Dioden umfaßt.

Das oben beschriebene IOM2 Interface zusammen mit einer vom Prozessor CPU1 steuerbaren Resetleitung und den oben erwähnten 5V isoliert bilden die sogenannte K-Schnittstelle K-i (K-Interface), über die das Schaltungsmodul DCI V anschließbar ist.

Das in Figur 3 dargestellte Adapterschaltungsmodul DCI V ist ebenfalls vorzugsweise unter Verwendung von Standardchips aufgebaut. Die zentrale Komponente des Schaltungsmoduls DCI V ist der (zweite) Prozessor CPU2, der ebenfalls durch einen Prozessor der Firma Siemens mit der Produktbezeichnung 80C188 gebildet sein kann. Dem zweiten Prozessor CPU2 sind ein Programmspeicher ROM2 und ein Speicher RAM2 zugeordnet. Ferner steht der zweite Prozessor CPU2 mit einem Baustein ITAC1 und ITAC2 über einen Datenbus in Verbindung. Der Baustein ITAC1 dient gleichzeitig zur Signalisierung zwischen den Prozessoren CPU1 und CPU2 über den Monitorkanal des IOM2-Busses. Die Bausteine ITAC1, ITAC2, die insbesondere durch das Produkt der Firma Siemens mit der Bezeichnung PSB2110 gebildet werden, enthalten zwei Serien-/Parallel-Umsetzer, die Bitraten adaptierter Signale auf zwei Nutzdatenkanälen B1, B2 mit jeweils 64 kBits/s steuern. Die Bausteine ITAC1, ITAC2 adaptieren die digitalen Bild- und Tonsignale des Videotelefons VT an den IOM2-Bus und damit an die beiden Nutzdatenkanäle B1 und B2. Die Bausteine ITAC1, ITAC2 sind an den IOM2-Bus der Endgeräteschnittstelle K-i angeschlossen. Ferner ist jeder Baustein ITAC1, ITAC2 mit einer X.21- oder V.35-Schnittstelle verbunden, über die Bild- und Sprachdatensignale zum bzw. vom Videotelefon VT übermittelt werden. Ferner weist das Schaltungsmodul DCI V einen Baustein ARCOFI2 auf, der dem im Endgerät T (Fig. 2) angeordneten Baustein ARCOFI1 baugleich ist. Ferner ist der zweite Mikroprozessor CPU2 mit einem bekannten Baustein V.24 UART (Universal Asynchron Receiver and Transmitter, V.24-Kontrollinterface) verbunden.

Da das Videotelefon VT die Bild- und Sprachsignale nach den bekannten Verfahren CCITT H.221 und H.261 oder einem von der schon genannten amerikanischen Fa. Picture Tel Corporation verwendeten Verfahren auf die beiden B-Kanäle komprimiert, müssen die Sprachsignale des Handapparats des Endgerätes T in das Videotelefon VT übertragen werden. Dazu weist das Anpassungsmodul DCI V einen Baustein ARCOFI 2 auf, der die Sprachsignale, die digital über die Schnittstelle K-i (IOM 2-Interface) vom Baustein ARCOFI 1 übertragen werden, wieder in analoge Signale umsetzt. Dieser Baustein ARCOFI 2 kann entfallen, wenn das Videotelefon VT eine digitale Akustikschnittstelle aufweist. In diesem Fall wird anstelle der bisher üblichen 8 Bit PCM Codierung vorzugsweise eine 16 Bit lineare Codierung benutzt. Dazu wird der Baustein ARCOFI 1 im Endgerät T beim Zustandekommen einer Videoverbindung in den linearen Mode geschaltet.

Ferner enthält das Anpassungsmodul DCI V eine Schnittstelle zu einer Kontrolltastatur KT, mit der das Videosystem VT gesteuert werden kann (z.B. Eigenbild, Fremdbild, Kamerazoom, Papiervorlage zeigen usw.) Die Tasten der Kontrolltastatur KT werden vom Prozessor CPU 2 gescannt und über den Baustein V24-UART Bitseriell an das Videotelefon VT übertragen. Die Kontrolltastatur KT kann in einer weiteren Ausführungsform auch an das Endgerät T über die Schnittstelle E2-i (Fig 2) angeschlossen sein. In diesem Fall werden die Tastatursignale über den IOM 2 Bus an das Videoanpassungsmodul DCI V übertragen, dort vom Prozessor CPU 2 gelesen und über den Baustein V24-UART an das Videotelefon VT übertragen.

Eine Verbindung, bei der Bild- und Sprachsignaldaten von dem Endgerät T bzw. von dem Videotelefon VT an ein weiteres Endgerät T bzw. ein weiteres Videotelefon übermittelt werden sollen, wird mittels des Fernmeldeendgeräts T ausgelöst.

Im Rahmen des Verbindungsherstellungsversuches wird von dem ersten Endgerät eine die Kommunikationsart ("VIDEO") der aufzubauenden Verbindung bezeichnende Information (Dienstekennzeichen) von dem ersten Fernmeldeendgerät T zu einem zweiten Fernmeldeendgerät signalisiert. Dazu werden die bekannten Informationselemente (CCITT Q931) "bearer capability" oder "low layer/high layer compatibility" benutzt. Für das zweite Fernmeldeendgerät wird anhand der signalisierten ersten Information geprüft, ob dieses eine entsprechende Verbindung ("VIDEO") herstellen kann. Weiterhin wird für das zweite Fernmeldeendgerät die momentane Empfangsbereitschaft überprüft. Ist das zweite Fernmeldeendgerät aufgrund seiner Ausstattung mit Leistungsmerkmalen verbindungsfähig und momentan empfangsbereit wird eine entsprechende Information ("zweite Information") zum ersten Fernmeldeendgerät signalisiert. Die vorgenannten Überprüfungen und das Bilden der Quittungsinformation kann durch eine Vermittlungseinrichtung oder durch das zweite Fernmeldeendgerät erfolgen.

Das erste Endgerät T, das die Quittungsinformation erhält, baut eine zweite Verbindung zu dem 2. Endgerät T auf, wenn die "zweite Information" signalisiert, daß das 2. Endgerät T ein Videotelefon VT enthält bzw. eine Videoverbindung erlaubt. Nach dem Aufbau der zweiten Verbindung überträgt das Endgerät T die Bild- und Sprachsignaldaten des Videotelefons VT über beide Nutzkanäle B1, B2 zum zweiten Endgerät T bzw. zu einem dort angekoppelten Videotelefon VT.

Das das Verfahren definierende Programm kann dem ersten Prozessor CPU1 des Fernmeldeendgeräts zugeordnet sein. Alternativ hierzu kann das Verfahren gemäß der Erfindung von dem ersten und einem zweiten Prozessor CPU2 durchgeführt werden. Dabei ist eine Funktionsverteilung in der Weise vorgesehen, daß der erste Prozessor CPU1 die erste Verbindung zum zweiten Fernmeldeendgerät aufbaut und den zweiten Prozessor CPU2 über die erfolgreiche erste Verbindung informiert. Ausgelöst durch diese Information baut der zweite Prozessor CPU2 die zweite Verbindung zum zweiten Fernmeldeendgerät auf. Weiterhin kann vorgesehen sein, daß der zweite Prozessor CPU 2 auch die Steuerung und Überwachung der ersten Verbindung übernimmt.

Eine weitere Ausführungsform der Erfindung ist dadurch gekennzeichnet, daß der zweite Prozessor CPU2 in einem mit dem ersten Fernmeldeendgerät T verbindbaren Schaltungsmodul implementiert ist. Schließlich kann vorgesehen sein, daß die Steuerung VTP des Videotelefons VT beispielsweise als Schaltungsmodul in das Endgerät T integriert ist.

**Patentansprüche**

1. Verfahren zur Herstellung von Fernmeldeverbindungen in einem ISDN-Kommunikationssystem, wobei bei einem ersten Verbindungsaufbau von einem ersten Fernmeldeendgerät (T) zu einem zweiten Fernmeldeendgerät eine die Kommunikationsart der aufzubauenden Verbindung bezeichnende Information von dem ersten Fernmeldeendgerät (T) zum zweiten Fernmeldeendgerät signalisiert wird, daß für das zweite Fernmeldeendgerät anhand der signalisierten ersten Information die kommunikationsartspezifische Verbindungsfähigkeit des zweiten Fernmeldeendgeräts sowie dessen momentane Empfangsbereitschaft überprüft wird, daß gegebenenfalls eine die Empfangsbereitschaft des zweiten Fernmeldeendgeräts bezeichnende zweite Information zum ersten Fernmeldeendgerät signalisiert wird, **dadurch gekennzeichnet,** daß das erste Fernmeldeendgerät (T), sofern die erste Information eine Bild- und Sprachsignaldaten umfassende Kommunikation bezeichnet, ausgelöst durch die zweite Information eine zweite Verbindung zu dem zweiten Fernmeldeendgerät aufbaut, daß nach dem Aufbau der zweiten Verbindung die Bild- und Sprachsignaldaten über zwei Nutzdatenkanäle (B1, B2) von dem ersten zum zweiten Fernmeldeendgerät übertragen werden.

2. Fernmeldeendgerät (T) zur Durchführung des Verfahrens nach Anspruch 1, **dadurch gekennzeichnet,** daß das Fernmeldeendgerät (T) einen ersten Prozessor (CPU1) aufweist, dem ein das Verfahren definierendes Programm zugeordnet ist.

3. Fernmeldeendgerät (T) zur Durchführung des Verfahrens nach Anspruch 1, **dadurch gekennzeichnet,** daß das Fernmeldeendgerät (T) einen ersten und zweiten Prozessor (CPU1, CPU2) aufweist, daß dem ersten und zweiten Prozessor (CPU1, CPU2) ein erstes und ein zweites Programm zugeordnet ist, daß das erste und zweite Programm in der Weise ausgestaltet ist, daß der erste Prozessor (CPU1) die erste Verbindung zum zweiten Fernmeldeendgerät aufbaut und ausgelöst durch die zweite Information den zweiten Prozessor (CPU2) in der Weise steuert, daß dieser die zweite Verbindung aufbaut.

4. Fernmeldeendgerät (T) nach Anspruch 2, **dadurch gekennzeichnet,** daß die Steuerung (VTP) des Videotelefons (VT) in das Fernmeldeendgerät (T) integriert ist.

5. Fernmeldeendgerät (T) nach Anspruch 3, **dadurch gekennzeichnet,** daß der zweite Prozessor (CPU2) in einem mit dem ersten Fernmeldeendgerät (T) verbindbaren Schaltungsmodul implementiert ist.

EP 0 532 972 A1

# FIG 1

VT

VTC

VTM

VTP

2 X.21(V35)
1 V24
Audio in/out

VTMC

VTLS

T

DCIV

B1,B2
UP
So

KT

# FIG 2

T

P Ctrl.

80C188
CPU1

+5V -5V +5V isol.

ICC

IOM2

SBC
(IBC)

S₀
(Up₀)

B1, B2

RAM1
64k×8

ARCOFI 1

HS

WR

Batterie

ROM1
256k×8

80C188
BUS

K-i

+5V isol.

DPL

Reset

DCIV

VT

DPL-Ctrl.

KL

Ga

E2-i

KT

Kb

6

# FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FUNKSCHAU<br>Bd. 60, Nr. 23, 4. November 1988, MUNCHEN DE<br>Seiten 58 - 61<br>W.SCHRÖCK ET AL.<br>* Seite 59, rechte Spalte - Seite 60, linke Spalte; Abbildungen 2,3 *<br>--- | 1,2,4 | H04Q11/04<br>H04M11/06<br>H04M1/00 |
| X | EP-A-0 405 899 (CANON)<br>* Spalte 5, Zeile 32 - Spalte 6, Zeile 22; Abbildungen 1,6 *<br>--- | 1,2,4 | |
| A | NACHRICHTEN TECHNIK ELEKTRONIK<br>Bd. 39, Nr. 8, 1989, BERLIN DD<br>Seiten 288 - 290<br>D.CARL ET AL.<br>* Seite 289, rechte Spalte *<br>--- | 1 | |
| A | GLOBECOM '86, SESSION 2, PAPER 4.<br>Bd. 1, Nr. 1, 1. Dezember 1986, HOUSTON US<br>Seiten 1 - 5<br>G.MENSA ET AL.<br>* Seite 2, linke Spalte; Abbildung 1 *<br>--- | 2,4 | RECHERCHIERTE SACHGEBIETE (Int. Cl.5) |
| A | COMPUTER NETWORKS AND ISDN SYSTEMS<br>Bd. 17, Nr. 2, 10. Juli 1989, AMSTERDAM NL<br>Seiten 149 - 152<br>J. VAN TILL<br>* Abbildung 2 *<br>--- | 1,2,4 | H04Q |
| P,X | EP-A-0 447 212 (CANON)<br>* Spalte 11, Zeile 19 - Spalte 12, Zeile 33; Abbildungen 1,9 *<br><br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 11 DEZEMBER 1992 | KURVERS F.J.J. |